# FASCICULE DE BREVET EUROPEEN

(11) **EP 1 515 489 B1**
(45) Date de publication et mention de la délivrance du brevet: **28.11.2007**
(21) Numéro de dépôt: 04291593.4
(22) Date de dépôt: 23.06.2004
(51) Int. Cl.: H04L 12/26, H04L 29/06

(54) **Réseau de communications à gestion de trafic par mesures actives configurables**
Kommunikationsnetz mit Verkehrsverwaltung durch aktive konfigurierbare Massnahmen
Communication network with traffic management through active configurable measures

(30) Priorité: 01.08.2003 FR 0309508
(43) Date de publication de la demande: 16.03.2005
(73) Titulaire: Alcatel Lucent, 75008 Paris (FR)
(72) Inventeur: Martinot, Olivier, 91210 Draveil (FR); Betge-Brezetz, Stéphane, 75015 Paris (FR); Chevanne, Michel, 92140 Clamart (FR); Delegue, Gérard, 94230 Cachan (FR); Marilly, Emmanuel, 91240 Saint-Michel-sur-Orge (FR)
(74) Mandataire: Chaffraix, Sylvain

(56) Documents cités:
- US-A1- 2003 133 443
- RICK WHITNER ET AL: "On Active Measurements in QoS-Enabled IP Networks" PROCEEDINGS OF PASSIVE AND ACTIVE MEASUREMENTS WORKSHOP, XX, XX, 25 mars 2002 (2002-03-25), pages 1-6, XP002277236
- ASGARI A ET AL: "A scalable real-time monitoring system for supporting traffic engineering" IEEE PUBLICATION, 29 octobre 2002 (2002-10-29), pages 202-207, XP010611972

## Description

L'invention concerne le domaine des réseaux de communications, et plus particulièrement la gestion de trafic au sein de tels réseaux.

Les opérateurs des réseaux de communications dits « gérés » passent habituellement avec leurs clients des accords de niveau de service (ou SLAs pour « Service Level Agreements ») par lesquels ils s'engagent à leur garantir une qualité de service (ou QoS) définie par des valeurs de paramètres ou caractéristiques de trafic, tels que l'instabilité (ou « jitter »), la perte de paquets et le retard de transmission.

Deux techniques sont actuellement utilisées pour contrôler la qualité de service. Une première technique consiste à effectuer des mesures dites passives, de type local ou « bout-en-bout » (ou « end-to-end »), sur le trafic à contrôler. Ces mesures passives étant effectuées à l'aide de dispositifs de mesures raccordés aux équipements de commutation (ou routeurs), elles nuisent au fonctionnement de ces routeurs, ne peuvent pas être automatisées et requièrent une configuration manuelle de leurs filtres. De ce fait, ces dispositifs sont généralement limités à certaines applications telles que l'ingénierie de trafic et l'affacturage. Une telle technique utilisant des mesures passives est descrite dans le document US 2003133443.

Une seconde technique consiste à effectuer des mesures dites « actives » sur un trafic (ou flux) additionnel injecté dans le réseau et présentant des similitudes avec le trafic devant faire l'objet d'un contrôle. On entend ici par « mesures actives » des mesures effectuées sur des paramètres du trafic additionnel, et dont les résultats partiels et/ou locaux peuvent être éventuellement intégrés dans le trafic additionnel. Ces mesures actives peuvent fournir des résultats comparables aux résultats de mesures passives. Ce trafic additionnel n'étant que partiellement identique au trafic à contrôler, et seulement partiellement adaptable, il n'est pas certain qu'il fournisse des caractéristiques de trafic (et donc des contenus et/ou des profils de trafic) réellement représentatifs de ceux du trafic à contrôler. Une telle technique utilisant des mesures actives est descrite dans le document "On Active Measurements in QoS-Enabled ip Networks" par Rich Whitner at all.

Par ailleurs, aucune de ces deux techniques ne permet de déterminer des marges de qualité de service (QoS) par rapport à la qualité de service nominale. En outre, ces deux techniques sont mises en oeuvre à l'aide de dispositifs de mesures qui doivent être raccordés aux routeurs, et qui de ce fait sont difficiles à implanter et à maintenir en état de marche.

Dans le cas de la seconde technique, il est connu de l'état de l'art que ce trafic additionnel doit se faire de manière à ce qu'il emprunte les mêmes chemins que le trafic normal et qu'il soit classifié de la même façon par l'éventuel processus de gestion de la qualité de service (QoS) dans le réseau (par exemple DiffServ). Une telle préoccupation est par exemple décrite dans les documents de Rich Whitner, Graham Pollock et Casey Cook intitulés « *On Active Measurements in QoS-enabled IP Networks* », publiés dans « *Proceedings of Passive and Active Measurements Workshop 2002 at Agilent Technologies* ». Toutefois, la solution décrite ne permet pas de s'adapter au trafic normal de façon automatique, et a fortiori de s'adapter à l'évolution de ce trafic au cours du temps. Mais surtout, elle ne montre pas en quoi ce trafic additionnel peut permettre d'obtenir des mesures représentatives du véritablem comportement du réseau.

L'invention a donc pour but de remédier à tout ou partie des inconvénients précités.

Elle propose à cet effet un procédé de gestion de trafic, pour un réseau de communications, consistant à effectuer des premières mesures passives sur au moins un trafic choisi de manière à délivrer des premières valeurs représentatives d'au moins une caractéristique de trafic choisie, puis à injecter dans le réseau un trafic additionnel correspondant aux premières valeurs de l'une au moins des caractéristiques de trafic choisies, et à effectuer des secondes mesures actives sur ce trafic additionnel de manière à déterminer s'il vérifie au moins une condition choisie.

Le procédé selon l'invention peut comporter d'autres caractéristiques qui pourront être prises séparément ou en combinaison, et notamment :
- une condition choisie parmi un ou plusieurs accords de niveau de service, une ou plusieurs caractéristiques définissant un nouveau service, et une ou plusieurs dégradations de qualité,
- on peut procéder à l'injection sur demande ou de façon automatisée et périodique,
- les premières et secondes mesures sont de type local et/ou de type dit « bout-en-bout »,
- on peut déterminer plusieurs caractéristiques de trafic afin d'en déduire un ou plusieurs contenus de trafic. Chaque contenu de trafic est par exemple choisi parmi la source ou la destination du trafic, la classe de service du trafic, le protocole (de couche réseau) utilisé, et la taille moyenne des données transmises,
- on peut déterminer un ou plusieurs profils de trafic à partir du contenu de trafic. Chaque profil est par exemple choisi parmi la répartition temporelle du trafic et la répartition de taille de charge du trafic,
- on peut déterminer une qualité de service à partir du contenu de trafic et/ou du profil de trafic. La qualité de service peut être locale et déterminée à partir de mesures telles que la bande passante utilisée, ou bien de bout-en-bout et déterminée à partir de mesures telles que le retard de transmission, l'instabilité ou le taux de perte de paquets de données, et/ou de calculs statistiques sur ces mesures,
- on peut effectuer des secondes mesures actives sur le trafic additionnel afin de déterminer la qualité de service associée, puis comparer cette qualité de service à celle du trafic choisi, précédemment déterminée, afin d'en déduire une éventuelle variation. Dans ce cas, lorsque la variation est supérieure à un seuil choisi, il est avantageux de réitérer les premières mesures passives sur le trafic choisi afin de déterminer de nouvelles premières valeurs représentatives de chaque caractéristique de trafic initialement choisie,
- on peut injecter dans le réseau un trafic auxiliaire correspondant à des valeurs représentatives d'une ou plusieurs caractéristiques auxiliaires et égales à celles des premières valeurs à un écart choisi près, puis effectuer des troisièmes mesures actives sur le trafic auxiliaire, et enfin comparer les troisièmes valeurs de ces troisièmes mesures aux secondes valeurs obtenues sur le trafic additionnel, afin de déterminer une marge de qualité de service disponible compte tenu de la qualité de service déterminée pour le trafic choisi,
- on peut injecter dans le réseau un trafic auxiliaire satisfaisant à une qualité de service auxiliaire égale à celle déterminée pour le trafic choisi à une marge choisie près, puis effectuer des troisièmes mesures actives sur le trafic auxiliaire, et comparer les troisièmes valeurs de ces troisièmes mesures aux secondes valeurs obtenues sur le trafic additionnel, afin de déterminer quelles variations de caractéristiques de trafic sont associées à la qualité de service auxiliaire.
   L'invention porte en outre sur un équipement de commutation, au sein d'un réseau de communication comportant des équipements de commutation couplés entre eux pour permettre l'établissement de trafics entre des terminaux de communication, et comprenant
- d'une part, des moyens d'application chargés d'injecter dans le réseau un trafic additionnel correspondant à des premières valeurs reçues, représentatives d'au moins une caractéristique de trafic choisie, et
- d'autre part, des moyens de mesure propres à effectuer des premières mesures passives sur au moins un trafic choisi, de manière à délivrer les premières valeurs, puis des secondes mesures actives sur le trafic additionnel, de manière à délivrer des secondes valeurs représentatives de chaque caractéristique de trafic choisie, et
- des moyens de gestion chargés de transmettre aux moyens d'application les premières valeurs des caractéristiques choisies et de déterminer à partir des secondes valeurs si le trafic additionnel vérifie au moins une condition choisie.

L'équipement selon l'invention peut comporter d'autres caractéristiques qui pourront être prises séparément ou en combinaison, et notamment :
- des moyens de gestion chargés de choisir la condition, en fonction d'instructions, parmi un ou plusieurs niveaux de service, une ou plusieurs caractéristiques définissant un nouveau service, et une ou plusieurs dégradations de qualité,
- des moyens d'application agencés de manière à procéder à l'injection consécutivement à la réception d'une instruction, ou bien automatiquement et selon une périodicité choisie,
- des moyens de mesure agencés de manière à effectuer des premières et secondes mesures actives locales et/ou de bout-en-bout,
- des moyens de mesure agencés de manière à délivrer des premières valeurs représentatives de plusieurs caractéristiques de trafic, de sorte que les moyens de gestion puissent déduire de ces premières valeurs un ou plusieurs contenus de trafic, puis à les stocker dans une mémoire,
- des moyens de gestion agencés de manière à déterminer un ou plusieurs profils de trafic à partir de l'un des contenus de trafic, puis à les stocker dans une mémoire,
- des moyens de gestion agencés de manière à déterminer une ou plusieurs qualités de service (locale(s) ou de bout-en-bout) à partir de l'un au moins des contenus de trafic et/ou de l'un au moins des profils de trafic, puis à les stocker dans une mémoire,
- des moyens de mesure agencés de manière à effectuer des secondes mesures actives sur le trafic additionnel, afin que les moyens de gestion puissent déterminer au moins une qualité de service associée aux résultats de ces secondes mesures actives, puis comparer la qualité de service du trafic additionnel à celle du trafic choisi, précédemment déterminée, afin d'en déduire une éventuelle variation. Par exemple, les moyens de gestion peuvent être agencés, lorsqu'ils détectent une variation supérieure à un seuil choisi, de manière à ordonner aux moyens de mesure de réitérer les premières mesures passives sur le trafic choisi afin de déterminer les nouvelles valeurs des caractéristiques de trafic initialement choisies,
- des moyens d'application agencés de manière à injecter dans le réseau, à réception d'instruction, un trafic auxiliaire correspondant à des valeurs d'une ou plusieurs caractéristiques auxiliaires égales aux premières valeurs précédemment déterminées à un écart choisi près. Dans ce cas, les moyens de mesure sont préférentiellement agencés pour effectuer des troisièmes mesures actives sur le trafic auxiliaire, et les moyens de gestion sont agencés pour comparer les valeurs de ces troisièmes mesures actives aux secondes valeurs obtenues sur le trafic additionnel, afin de déterminer une marge de qualité de service disponible compte tenu de la qualité de service déterminée pour le trafic choisi,
- des moyens d'application agencés de manière à injecter dans le réseau, à réception d'instruction, un trafic auxiliaire satisfaisant à une qualité de service auxiliaire égale à celle déterminée pour le trafic choisi à une marge choisie près. Dans ce cas, les moyens de mesure sont préférentiellement agencés pour effectuer des troisièmes mesures actives sur le trafic auxiliaire, et les moyens de gestion sont agencés pour comparer les résultats de ces troisièmes mesures actives aux secondes valeurs obtenues sur le trafic additionnel, afin de déterminer quelle(s) variation(s) de caractéristique(s) de trafic est (sont) associées à la qualité de service auxiliaire,
- un ou plusieurs terminaux de gestion équipés de moyens de gestion et d'une mémoire. Chaque terminal peut par exemple faire partie d'un système de gestion de réseau, ou d'un sous-système de gestion de réseau couplé à un système de gestion de réseau,
- certains au moins des équipements de commutation sont des routeurs périphériques ou des routeurs de coeur.

Enfin, l'invention a également pour objet un réseau de communications, comportant des équipements de commutation couplés entre eux de manière à permettre l'établissement de trafics entre terminaux de communication, caractérisé en ce que certains au moins desdits équipements de commutation soient conformes à ceux décrits précédemment..

L'invention est particulièrement bien adaptée, bien que de façon non limitative, aux réseaux de communication à protocole Internet (IP). Dans une telle situation, les équipements de commutation sont habituellement appelés « routeurs ».

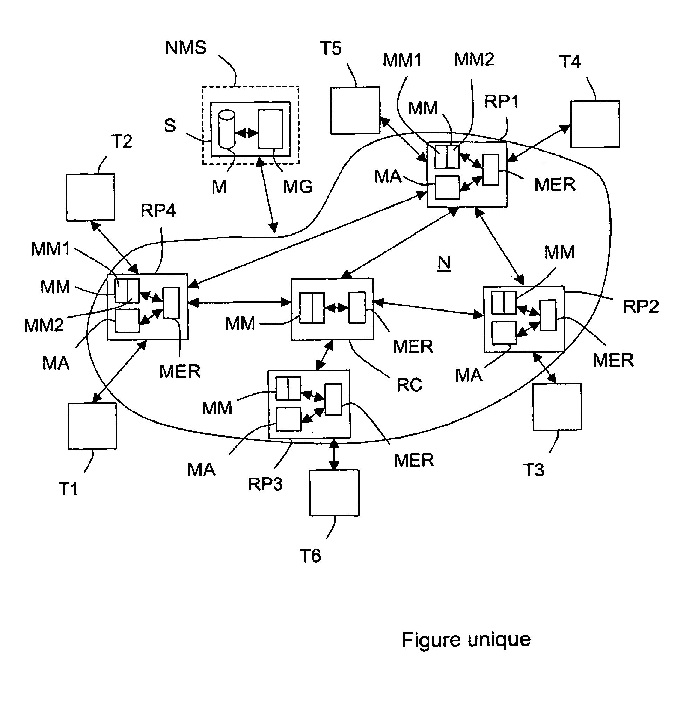

D'autres caractéristiques et avantages de l'invention apparaîtront à l'examen de la description détaillée ci-après, et du dessin annexé, sur lequel l'unique figure illustre de façon schématique un exemple de réalisation d'un réseau de communications selon l'invention. Le dessin annexé pourra non seulement servir à compléter l'invention, mais aussi contribuer à sa définition, le cas échéant.

L'invention a pour objet de permettre la gestion des trafics au sein d'un réseau de communications.

Dans ce qui suit, on considèrera que le réseau de communications est un réseau à protocole Internet (IP). Mais, l'invention n'est pas limitée à ce seul type de réseau. Elle concerne également, notamment, les réseaux de type ADSL.

Comme cela est illustré sur l'unique figure, un réseau internet N peut être, d'une façon très schématique, assimilé à un ensemble d'équipements de commutation (ou noeuds) RPi et RC, raccordés entre eux de manière à assurer le routage de paquets de données qu'ils reçoivent, et à un ensemble de terminaux de communication Tj, raccordés à certains équipements de communication (ou noeuds) RPi, éventuellement via un ou plusieurs autres terminaux de type serveur d'accès, de manière à échanger entre eux des paquets de données.

Les équipements de commutation (ou noeuds) sont généralement des routeurs périphériques (ou « edge routers ») RPi (ici i = 1 à 4, mais il peut prendre n'importe quelle valeur supérieure ou égale à un), et des routeurs de coeur (ou « core routers »). Ici, un seul routeur de coeur RC a été représenté, mais il peut y en avoir d'autres.

On considère dans ce qui suit, à titre d'exemple non limitatif, que tous les équipements de commutation RPi et RC utilisent au moins la version de protocole de couche réseau de type IPv4 (ou IPv6 en variante).

Par ailleurs, on entend ici par « terminal de communication » Tᵢ (ici ᵢ = 1 à 6, mais il peut prendre n'importe quelle valeur supérieure ou égale à deux), tout équipement de réseau capable d'échanger des paquets de données, comme par exemple un ordinateur portable ou fixe, un téléphone fixe ou mobile, un assistant personnel numérique (ou PDA pour « Personal Digital Assistant »), ou un serveur.

En outre, on considère dans ce qui suit que le réseau N comporte un système de gestion de réseau ou NMS (pour « Network Management System ») couplé, notamment, à ses équipements de commutation RPi et RC.

Le système de gestion de réseau NMS, également appelé système d'exploitation du réseau, permet notamment au gestionnaire (ou superviseur) du réseau de gérer les équipements de commutation RPi et RC qui le constituent. A cet effet, les équipements de commutation RPi et RC sont agencés de manière à pouvoir échanger des données selon un protocole de gestion de réseau avec le système de gestion NMS, comme par exemple le protocole SNMP (pour « Simple Network Management Protocol » RFC 2571-2580).

L'invention a pour but de permettre la gestion de certains trafics (ou flux), au sein du réseau N, entre des terminaux Tᵢ choisis, comme par exemple des trafics d'utilisateurs (ou clients) ayant passé des accords de niveau de service (ou SLA) avec l'opérateur du réseau. Comme indiqué précédemment, ces SLAs contiennent des valeurs de paramètres ou caractéristiques de trafic qui définissent pour chaque client une qualité de service (ou QoS) que l'opérateur s'engage à lui fournir.

Afin de permettre le contrôle de la qualité de service de certains au moins des trafics d'utilisateurs au sein du réseau N, certains au moins des routeurs RPi et RC sont équipés de modules de mesures MM, préférentiellement internes. Chaque module de mesures MM est, au moins fonctionnellement, subdivisé en deux parties MM1 et MM2 destinées respectivement à effectuer des mesures passives et actives, de type local ou de type bout-en-bout (ou « end-to-end »), sur au moins un trafic d'utilisateur passant par le routeur dans lequel il est implanté.

Ces mesures passives ont pour objet de permettre aux premières parties MM1 des modules de mesures passives MM de délivrer des valeurs (ou résultats de mesure) représentatives de caractéristiques (ou paramètres) choisi(e)s d'un trafic utilisateur donné. Ces mesures passives concernent spécifiquement le trafic utilisateur donné et sont par exemple des mesures de débit du trafic au point de mesure, des mesures de comptage du nombre de paquets du trafic ou du nombre de bits du trafic ayant traversé le point de mesure, ou des mesures de la date d'observation. Ces valeurs sont adressées par le module d'émission/réception MER que comprend chaque routeur RPi, RC, via les liens (ou connexions) du réseau N, à un module de gestion MG implanté, par exemple, dans un serveur (ou terminal) de gestion S du NMS, comme illustré. En variante, le serveur S pourrait appartenir à un sous-système de gestion chargé de gérer les trafics d'une partie du réseau N et préférentiellement couplé au NMS (principal) dudit réseau N.

Comme on le verra plus loin ces caractéristiques (ou paramètres) de trafic permettront au module de gestion MG de déterminer, notamment, un ou plusieurs contenus de trafic, comme par exemple la source ou la destination du trafic, la classe de service du trafic, le protocole de couche réseau utilisé, ou la taille moyenne des données transmises.

Dans l'exemple illustré, tous les routeurs périphériques RPi et le routeur de coeur RC sont équipés d'un module de mesure MM. Mais, on peut envisager que seuls les routeurs périphériques RPi, ou seulement certains d'entre eux, soient équipés de modules de mesures passives MM. L'implantation d'un module de mesures MM dans un routeur de coeur RC est plus particulièrement utile lorsqu'une portion de réseau doit pouvoir être testée, notamment en cas de détection d'une dégradation locale de la qualité de service.

Le module de gestion MG est chargé, lorsqu'il a reçu des premières valeurs, de déterminer la ou les caractéristiques de trafic qu'elle(s) représente(nt), puis de stocker ces valeurs dans une mémoire M, en correspondance du trafic associé.

Il peut en complément déterminer un ou plusieurs contenus de trafic à partir des premières valeurs de caractéristiques de trafic. Ce contenu de trafic peut être obtenu en interprétant l'entête (ou « header ») du paquet observé (header du paquet IP par exemple), les entêtes des protocoles de niveau supérieur (TCP, UDP), ou la charge utile. Le contenu de trafic peut par exemple porter sur la source des paquets de données constituant le trafic d'utilisateur, ou la destination du trafic d'utilisateur, ou encore la classe de service du trafic d'utilisateur, ou encore le protocole de couche réseau utilisé (par exemple IPv4 ou IPv6), ou encore la taille moyenne des données transmises par ledit trafic. Optionnellement, la charge utile peut être interprétée afin de préciser des caractéristiques supplémentaires de contenu de trafic. Chaque contenu peut être stocké dans la mémoire M. Mais, il peut également faire l'objet d'une accumulation sur une durée choisie, avant mémorisation.

Le module de gestion MG peut également être agencé de manière à déterminer un ou plusieurs profils de trafic à partir d'un ou plusieurs contenus de trafic. L'historique du trafic utilisateur est mémorisé pour ce qui concerne les caractéristiques de profil à retracer, comme par exemple les dates d'observation des paquets, les tailles des paquets ou les protocoles. Le profil peut par exemple porter sur la répartition temporelle du trafic, ou la répartition de taille de charge (ou « payload ») du trafic, ou encore sur un profil de séquencement protocolaire. Le profil ainsi déterminé est ensuite préférentiellement stocké dans la mémoire M.

Le module de gestion MG peut également être agencé de manière à déterminer une qualité de service (QoS) à partir des mesures passives effectuées par les agents MM1 et associées à un ou plusieurs contenus de trafic et/ou un ou plusieurs profils de trafic. La qualité de service (QoS), en terme de délai de transfert entre deux points contenant des modules de mesures MM, peut être obtenue, par exemple, en soustrayant la date d'observation d'un paquet donné du trafic utilisateur en ces deux points. Plus généralement, tout type de qualité de service peut être déterminé, et notamment la QoS locale, à partir de mesures telles que la bande passante utilisée ou le nombre de paquets ayant été observé, et la QoS de bout-en-bout, à partir de mesures telles que le retard de transmission, la gigue (ou instabilité), le taux de perte de paquets de données, et le nombre effectif de paquets ayant transité (cette liste n'est pas exhaustive). La qualité de service locale ou de bout-en-bout peut être également déterminée à partir de calculs statistiques effectués sur les mesures précitées, comme par exemple des moyennes, des variances, des minima ou des maxima.

La qualité de service ainsi déterminée est ensuite préférentiellement stockée dans la mémoire M.

Une fois que le module de gestion MG est en possession des caractéristiques du trafic objet du contrôle, quelle qu'en soit la forme (contenu, profil ou QoS), il peut transmettre certaines au moins de leurs (premières) valeurs à des modules d'application MA choisis, implantés dans des routeurs (ici seulement ceux de type périphérique RPi, mais il pourrait également s'agir de routeur de coeur RC) par lesquels passe le trafic concerné.

Plus précisément, le module de gestion MG transmet les valeurs de caractéristique(s) choisie(s) au module d'application MA qui est implanté dans le routeur périphérique RPi raccordé au terminal Tᵢ qui l'alimente en paquets de données (et constitue ainsi une source). Par exemple, le module de gestion MG alimente en valeurs le routeur périphérique RP2 qui est raccordé au terminal T3 pour lequel existe un SLA associé au trafic avec le terminal T1 (qui constitue une destination) raccordé au routeur périphérique RP4. A réception de ces valeurs, le module d'application MA se configure de manière à générer un trafic additionnel correspondant auxdites valeurs de caractéristique(s) de trafic, puis il le transmet au module d'émission/réception MER de son routeur périphérique (ici RP2), de sorte qu'il l'injecte dans le réseau N à destination du routeur périphérique (ici RP4) destinataire « final » du trafic concerné, objet des mesures passives.

L'injection peut s'opérer sur ordre, à réception d'instructions provenant par exemple du NMS, ou bien de façon automatisée, par exemple périodiquement.

Le trafic additionnel est destiné à reproduire au plus près le trafic d'utilisateur correspondant. C'est la raison pour laquelle il est généré de manière à satisfaire au plus grand nombre possible de caractéristiques du trafic contrôlé, et si possible à toutes ses caractéristiques objets des premières mesures.

Ce trafic additionnel fait donc également l'objet de (secondes) mesures actives. A cet effet, on utilise également les modules de mesures MM implantés dans les routeurs RPi et RC, et plus précisément leur seconde partie MM2 dédiée aux mesures actives. Les secondes parties MM2 des modules de mesures MM sont agencées pour reconnaître les trafics additionnels qui parviennent dans leur routeur et pour effectuer des secondes mesures actives, préférentiellement identiques aux premières mesures effectuées sur le trafic d'utilisateur correspondant, puis pour délivrer, à destination du module de gestion MG, des secondes valeurs représentatives des caractéristiques choisies.

Les mesures actives sont des mesures effectuées sur des paramètres du trafic additionnel (et non sur le trafic utilisateur), et dont les résultats partiels et/ou locaux peuvent être éventuellement intégrés dans le trafic additionnel, par exemple sous forme d'informations permettant de calculer les résultats des mesures d'une manière différente et généralement plus directe que celle utilisée pour les premières mesures passives. En d'autres termes, les parties MM1 et MM2 procèdent différemment, mais délivrent généralement des résultats de mesure comparables.

Ces secondes mesures actives sont préférentiellement du même type que les premières mesures (passives), c'est-à-dire locales ou de bout-en-bout, afin de permettre les comparaisons.

Le module de gestion MG est chargé de déterminer si le trafic additionnel vérifie au moins une condition choisie à partir des secondes mesures qu'il reçoit des routeurs.

Plusieurs conditions peuvent faire l'objet d'une vérification. On peut par exemple vérifier que le trafic additionnel satisfait au niveau de service défini par le SLA dédié au trafic d'utilisateur correspondant. Cela permet à l'opérateur de vérifier s'il respecte la qualité de service convenue avec un utilisateur.

En variante, on peut vérifier si le trafic additionnel satisfait à un nouveau service. En d'autres termes, cela permet de vérifier si les caractéristiques des services associés au trafic d'un utilisateur peuvent supporter un nouveau service.

Dans une autre variante, on quantifie les dégradations de la qualité de service, associée à un trafic d'utilisateur, en analysant les secondes valeurs (des secondes mesures), introduites par un ou plusieurs problèmes réseau, par rapport à leurs (premières) valeurs nominales. Cela permet d'utiliser les caractéristiques de trafic associées à ces secondes valeurs, et qui correspondent à une dégradation, pour déterminer l'origine de la dégradation à l'aide d'outils de diagnostique tels que des outils dits de « Root Cause Analysis », implantés dans le NMS.

La vérification de la condition peut consister, par exemple, à comparer les premières valeurs résultant des premières mesures, effectuées sur le trafic d'utilisateur concerné, aux secondes valeurs résultant des secondes mesures, effectuées sur le trafic additionnel correspondant. Mais, il peut également s'agir d'une confrontation entre contenus de trafic, ou profils de trafic, ou encore qualités de service, obtenus à partir de premières et secondes valeurs.

Le module de gestion MG peut ainsi déduire d'une vérification une éventuelle variation de contenu, de profil ou de qualité de service (QoS).

Par exemple, en cas de détection d'une variation de qualité de service (QoS), le module de gestion MG peut être agencé de manière à comparer cette variation à un seuil choisi, et à ordonner aux modules de mesure MM concernés de refaire des premières mesures passives sur le trafic d'utilisateur, associé au trafic additionnel objet de la variation. A réception des nouvelles premières valeurs, le module de gestion MG peut alors les comparer aux précédentes premières valeurs, stockées dans la mémoire M, et déterminer si la variation précédemment déterminée sur le trafic additionnel résulte effectivement d'un problème survenu sur le réseau N, ou si elle résulte d'une différence de traitement du trafic additionnel par le réseau N du fait de son caractère pseudo-déterministe.

Par ailleurs, les modules d'application MA peuvent être configurés de manière à injecter dans le réseau N, sur ordre, par exemple du NMS, un trafic auxiliaire correspondant à une ou plusieurs caractéristiques (auxiliaires) de valeurs égales aux premières valeurs, précédemment déterminées, à un écart choisi près. Un tel trafic auxiliaire, qui est du même type qu'un trafic additionnel, a par exemple pour objet de permettre au module de gestion MG de déterminer une marge de qualité de service (telle qu'une nouvelle répartition temporelle) disponible dans le réseau N, compte tenu de la qualité de service correspondant au trafic d'utilisateur concerné.

Lorsque les routeurs concernés reçoivent ce trafic auxiliaire, la seconde partie MM2 de leurs modules de mesure MM effectue des troisièmes mesures actives sur lui, préférentiellement identiques aux secondes mesures actives précédemment effectuées sur le trafic additionnel correspondant et dont les résultats sont comparables aux résultats des premières mesures du trafic d'utilisateur. Les (troisièmes) valeurs résultant de ces troisièmes mesures sont ensuite transmises par les routeurs concernés, et plus précisément par leurs modules d'émission/réception MER, au module de gestion MG qui peut les comparer aux secondes valeurs précédemment obtenues sur le trafic additionnel, et qui ont été stockées dans la mémoire M. Il peut ainsi vérifier si le trafic d'utilisateur supporte les variations de valeurs de caractéristiques et déduire de cette comparaison ou de plusieurs comparaisons successives la marge de qualité de service disponible pour le trafic d'utilisateur considéré.

En variante et/ou en complément, les modules d'application MA peuvent être configurés de manière à injecter dans le réseau N, sur ordre, par exemple du NMS, un trafic auxiliaire correspondant à une qualité de service (auxiliaire) égale à celle déterminée pour le trafic choisi à une marge choisie près. Par exemple, la marge de qualité de service porte sur la valeur maximale de retard de transmission ou d'instabilité. Un tel trafic auxiliaire, qui est également du même type qu'un trafic additionnel, a par exemple pour objet de permettre au module de gestion MG de déterminer quelle(s) variation(s) de caractéristique(s) de trafic peu(ven)t permettre de supporter la qualité de service auxiliaire (c'est-à-dire une qualité de service égale à la QoS nominale à une marge choisie près).

Lorsque les routeurs concernés reçoivent ce trafic auxiliaire, la seconde partie MM2 de leurs modules de mesure MM effectue des troisièmes mesures actives sur lui, préférentiellement identiques aux secondes mesures actives précédemment effectuées sur le trafic additionnel correspondant et dont les résultats sont comparables aux résultats des premières mesures passives du trafic d'utilisateur. Les (troisièmes) valeurs résultant de ces troisièmes mesures sont ensuite transmises par les routeurs concernés, et plus précisément par leurs modules d'émission/réception MER, au module de gestion MG qui peut les comparer aux secondes valeurs précédemment obtenues sur le trafic additionnel, et qui ont été stockées dans la mémoire M. Il peut ainsi déterminer comment l'on peut faire varier les valeurs des caractéristiques qui définissent le trafic d'utilisateur pour que la qualité de service associée reste dans la marge testée.

Les modules d'application MA et le module de gestion MG du réseau selon l'invention peuvent être réalisés sous la forme de circuits électroniques, de modules logiciels (ou informatiques), ou d'une combinaison de circuits et de logiciels.

L'invention offre également un procédé de gestion de trafic, pour un réseau de communications.

Celui-ci peut être notamment mis en oeuvre à l'aide du réseau de communications N présenté ci-avant, et notamment de ces équipements de commutation RPi et RC et de son serveur de gestion S. Les fonctions et sous-fonctions principales et optionnelles assurées par les étapes de ce procédé étant sensiblement identiques à celles assurées par les modules de mesures MM, modules d'application MA et module de gestion MG du réseau N, seules seront résumées ci-après les étapes mettant en oeuvre les fonctions principales du procédé selon l'invention.

Ce procédé consiste, à effectuer des premières mesures passives sur au moins un trafic choisi de manière à délivrer des premières valeurs représentatives d'au moins une caractéristique de trafic choisie, puis à injecter dans le réseau N un trafic additionnel correspondant aux premières valeurs de l'une au moins des caractéristiques de trafic choisies, et à effectuer des secondes mesures actives sur ce trafic additionnel de manière à déterminer s'il vérifie au moins une condition choisie.

L'invention ne se limite pas aux modes de réalisation de réseau de communications, d'équipement de commutation, de serveur de gestion et de procédé de gestion de trafic décrits ci-avant, seulement à titre d'exemple, mais elle englobe toutes les variantes que pourra envisager l'homme de l'art dans le cadre des revendications ci-après.

Ainsi, dans ce qui précède il a été question de modules de mesures et de modules d'application implantés dans des routeurs. Mais, ces modules pourraient être logés dans un boîtier dédié ou sur une carte dédiée destinée à être raccordée à un routeur.

Par ailleurs, dans ce qui précède il a été question d'un module de gestion et d'une mémoire implantés dans un serveur (ou terminal) de gestion d'un système de gestion du réseau (NMS). Mais, le module de gestion et la mémoire pourraient être implantés dans un serveur (ou terminal) de gestion d'un sous-système de gestion couplé au système de gestion du réseau (NMS) et chargé de gérer une partie du réseau.

## Revendications

1. Procédé de gestion de trafic pour un réseau de communications (N) comportant des équipements de commutation (RPi, RC), ledit procédé comportant les étapes suivantes :
i) effectuer des premières mesures passives sur au moins un trafic choisi de manière à délivrer des premières valeurs représentatives d'au moins une caractéristique de trafic choisie, et
ii) injecter dans ledit réseau (N) un trafic additionnel correspondant aux premières valeurs d'au moins l'une desdites caractéristiques de trafic choisies,
puis effectuer des secondes mesures actives sur ledit trafic additionnel de manière à déterminer s'il vérifie au moins une condition choisie.

2. Procédé selon la revendication 1, **caractérisé en ce que** ladite condition est choisie dans un groupe comprenant au moins un accord de niveau de service, au moins une caractéristique définissant un nouveau service, et au moins une dégradation de qualité.

3. Procédé selon l'une des revendications 1 ou 2, **caractérisé en ce que** lesdites premières et secondes mesures sont de type local et/ou de type dit « bout-en-bout ».

4. Procédé selon l'une des revendications 1 à 3, **caractérisé en ce que** l'on détermine plusieurs caractéristiques de trafic de manière à en déduire au moins un contenu de trafic.

5. Procédé selon la revendication 4, **caractérisé en ce que** ledit contenu de trafic est choisi parmi la source du trafic, la destination du trafic, la classe de service à laquelle appartient le trafic, le protocole (de couche réseau) utilisé, et la taille moyenne des données transmises.

6. Procédé selon l'une des revendications 4 et 5, **caractérisé en ce que** l'on détermine au moins un profil de trafic à partir dudit contenu de trafic.

7. Procédé selon la revendication 6, **caractérisé en ce que** ledit profil de trafic est choisi parmi la répartition temporelle du trafic et la répartition de taille de charge du trafic.

8. Procédé selon l'une des revendications 4 à 7, **caractérisé en ce que** l'on détermine une qualité de service à partir dudit contenu de trafic et/ou dudit profil de trafic.

9. Procédé selon la revendication 8, **caractérisé en ce que** l'on détermine une qualité de service locale.

10. Procédé selon la revendication 9, **caractérisé en ce que** ladite qualité de service locale est déterminée à partir de mesures choisies dans un groupe comprenant au moins la bande passante utilisée et le nombre de paquets ayant été observé, et/ou de calculs statistiques sur lesdites mesures.

11. Procédé selon l'une des revendications 8 à 10, **caractérisé en ce que** l'on détermine une qualité de service de bout-en-bout.

12. Procédé selon la revendication 11, **caractérisé en ce que** ladite qualité de service de bout-en-bout est déterminée à partir de mesures choisies dans un groupe comprenant au moins le retard de transmission, l'instabilité et le taux de perte de paquets de données, et/ou de calculs statistiques sur lesdites mesures.

13. Procédé selon l'une des revendications 8 à 12, **caractérisé en ce que** l'on effectue des secondes mesures actives sur ledit trafic additionnel de manière à déterminer la qualité de service associée, puis on compare ladite qualité de service du trafic additionnel à la qualité de service du trafic choisi, précédemment déterminée, de manière à en déduire une éventuelle variation.

14. Procédé selon la revendication 13 **caractérisé en ce que** si ladite variation est supérieure à un seuil choisi on réitère lesdites premières mesures passives sur ledit trafic choisi de manière à déterminer de nouvelles premières valeurs représentatives au moins de ladite caractéristique de trafic choisie.

15. Procédé selon l'une des revendications 8 à 14, **caractérisé en ce que** l'on injecte dans ledit réseau (N) un trafic auxiliaire satisfaisant à au moins une caractéristique auxiliaire de valeur égale à la première valeur de ladite caractéristique de trafic précédemment déterminée à un écart choisi près, puis on effectue des troisièmes mesures actives sur ledit trafic auxiliaire, et on compare les troisièmes valeurs de ces troisièmes mesures aux secondes valeurs précédemment obtenues sur ledit trafic additionnel, de manière à déterminer une marge de qualité de service disponible compte tenu de ladite qualité de service déterminée pour ledit trafic choisi.

16. Procédé selon l'une des revendications 8 à 15, **caractérisé en ce que** l'on injecte dans ledit réseau (N) un trafic auxiliaire satisfaisant à une qualité de service auxiliaire égale à celle déterminée pour ledit trafic choisi à une marge choisie près, puis on effectue des troisièmes mesures actives sur ledit trafic auxiliaire, et on compare les troisièmes valeurs de ces troisièmes mesures aux secondes valeurs précédemment obtenues sur ledit trafic additionnel, de manière à déterminer quelle(s) variation(s) de caractéristique(s) de trafic est (sont) associées à ladite qualité de service auxiliaire.

17. Équipement de commutation (RPi) pour un réseau de communications (N) comportant des équipements de commutation (RPi, RC) couplés entre eux de manière à permettre l'établissement de trafics entre terminaux de communication (Tⱼ), l'équipement comprenant :
i) moyens d'application (MA) agencés pour injecter dans ledit réseau (N) un trafic additionnel correspondant à des premières valeurs reçues, représentatives d'au moins une caractéristique de trafic choisie, et
ii) des moyens de mesure (MM) propres à effectuer des premières mesures passives sur au moins un trafic choisi, de manière à délivrer lesdites premières valeurs représentatives d'au moins chaque caractéristique de trafic choisie, puis des secondes mesures actives sur ledit trafic additionnel, de manière à délivrer des secondes valeurs représentatives de chaque caractéristique de trafic choisie, et
l'equipement étant adapté pour communiquer avec des moyens de gestion (MG) agencés pour transmettre auxdits moyens d'application (MA) lesdites premières valeurs et pour déterminer à partir desdites secondes valeurs si ledit trafic additionnel vérifie au moins une condition choisie.

18. Équipement selon la revendication 17, **caractérisé en ce que** lesdits moyens de gestion (MG) sont agencés pour choisir ladite condition, en fonction d'instructions, dans un groupe comprenant au moins un accord de niveau de service, au moins une caractéristique définissant un nouveau service, et au moins une dégradation de qualité.

19. Équipement selon l'une des revendications 17 et 18, **caractérisé en ce que** lesdits moyens d'application (MA) sont agencés pour procéder à ladite injection à réception d'instruction.

20. Équipement selon l'une des revendications 17 à 19, **caractérisé en ce que** lesdits moyens d'application (MA) sont agencés pour procéder à ladite injection automatiquement et selon une périodicité choisie.

21. Équipement selon l'une des revendications 17 à 20 **caractérisé en ce que** lesdits moyens de mesure (MM) sont agencés pour effectuer des premières mesures passives et secondes mesures actives de type local et/ou de type dit « bout-en-bout ».

22. Équipement selon l'une des revendications 17 à 21, **caractérisé en ce que** lesdits moyens de mesure (MM) sont agencés pour déterminer des premières valeurs représentatives de plusieurs caractéristiques de trafic, et **en ce que** lesdits moyens de gestion (MG) sont agencés pour déduire desdites premières valeurs de caractéristiques de trafic au moins un contenu de trafic, de manière à le stocker dans une mémoire (M).

23. Équipement selon la revendication 22, **caractérisé en ce que** ledit contenu de trafic est choisi parmi la source du trafic, la destination du trafic, la classe de service à laquelle appartient le trafic, le protocole (de couche réseau) utilisé, et la taille moyenne des données transmises.

24. Équipement selon l'une des revendications 22 et 23, **caractérisé en ce que** lesdits moyens de gestion (MG) sont agencés pour déterminer au moins un profil de trafic à partir dudit contenu de trafic, de manière à le stocker dans une mémoire (M).

25. Équipement selon la revendication 24, **caractérisé en ce que** ledit profil de trafic est choisi parmi la répartition temporelle du trafic et la répartition de taille de charge du trafic.

26. Équipement selon l'une des revendications 22 à 25, **caractérisé en ce que** lesdits moyens de gestion sont agencés pour déterminer une qualité de service à partir dudit contenu de trafic et/ou dudit profil de trafic, de manière à la stocker dans une mémoire (M).

27. Équipement selon la revendication 26, **caractérisé en ce que** lesdits moyens de gestion (MG) sont agencés pour déterminer une qualité de service locale.

28. Équipement selon la revendication 27, **caractérisé en ce que** ladite qualité de service locale est déterminée à partir de mesures choisies dans un groupe comprenant au moins la bande passante utilisée et le nombre de paquets ayant été observé, et/ou de calculs statistiques sur lesdites mesures.

29. Équipement selon l'une des revendications 26 à 28, **caractérisé en ce que** lesdits moyens de gestion (MG) sont agencés pour déterminer une qualité de service de bout-en-bout.

30. Équipement selon la revendication 29, **caractérisé en ce que** ladite qualité de service de bout-en-bout est déterminée à partir de mesures choisies dans un groupe comprenant au moins le retard de transmission, l'instabilité et le taux de perte de paquets de données, et/ou de calculs statistiques sur lesdites mesures.

31. Équipement selon l'une des revendications 26 à 30, **caractérisé en ce que** lesdits moyens de mesure (MM) sont agencés pour effectuer des secondes mesures actives sur ledit trafic additionnel, et **en ce que** lesdits moyens de gestion (MG) sont agencés pour déterminer une qualité de service associée aux secondes valeurs desdites secondes mesures actives, puis pour comparer ladite qualité de service du trafic additionnel à la qualité de service du trafic choisi, précédemment déterminée, de manière à en déduire une éventuelle variation.

32. Équipement selon la revendication 31, **caractérisé en ce que** lesdits moyens de gestion (MG) sont agencés, en cas de détection d'une variation supérieure à un seuil choisi, pour ordonner auxdits moyens de mesure (MM) de réitérer lesdites premières mesures passives sur ledit trafic choisi, de manière à déterminer de nouvelles premières voleurs de caractéristique(s) de trafic choisie(s).

33. Équipement selon l'une des revendications 26 à 32, **caractérisé en ce que** lesdits moyens d'application (MA) sont agencés pour injecter dans ledit réseau (N), à réception d'instruction, un trafic auxiliaire satisfaisant à au moins une caractéristique auxiliaire de valeur égale à celle de ladite caractéristique de trafic précédemment déterminée à un écart choisi près, **en ce que** lesdits moyens de mesure (MM) sont agencés pour effectuer des troisièmes mesures actives sur ledit trafic auxiliaire, et **en ce que** lesdits moyens de gestion (MG) sont agencés pour comparer les valeurs desdites troisièmes mesures actives aux valeurs desdites secondes mesures actives précédemment effectuées sur ledit trafic additionnel, de manière à déterminer une marge de qualité de service disponible compte tenu de ladite qualité de service déterminée pour ledit trafic choisi.

34. Équipement selon l'une des revendications 26 à 33, **caractérisé en ce que** lesdits moyens d'application (MA) sont agencés pour injecter dans ledit réseau (N), à réception d'instruction, un trafic auxiliaire satisfaisant à une qualité de service auxiliaire égale à celle déterminée pour ledit trafic choisi à une marge choisie près, **en ce que** lesdits moyens de mesure (MM) sont agencés pour effectuer des troisièmes mesures actives sur ledit trafic auxiliaire, et **en ce que** lesdits moyens de gestion (MG) sont agencés pour comparer les valeurs résultant desdites troisièmes mesures actives aux valeurs desdites secondes mesures actives précédemment effectuées sur ledit trafic additionnel, de manière à déterminer quelle(s) variation(s) de caractéristique(s) de trafic est (sont) associées à ladite qualité de service auxiliaire.

35. Réseau de communications (N), comportant des équipements de commutation (RPi, RC) couplés entre eux de manière à permettre l'établissement de trafics entre terminaux de communication (Tⱼ), **caractérisé en ce que** au moins un desdits équipements de commutation (RPi) soit conforme à l'une des revendications 17 à 34.

36. Réseau selon la revendication précédente, **caractérisé en ce qu**'il comprend au moins un terminal de gestion (S) équipé desdits moyens de gestion (MG) et de ladite mémoire (M).

37. Réseau selon la revendication 35, **caractérisé en ce que** ledit terminal de gestion (S) appartient à un système de gestion de réseau (NMS).

38. Réseau selon la revendication 35, **caractérisé en ce que** ledit terminal de gestion (S) appartient à un sous-système de gestion de réseau couplé à un système de gestion de réseau (NSM).

39. Réseau selon l'une des revendications 35 à 38, **caractérisé en ce que** certains au moins desdits équipements de commutation sont des routeurs périphériques (RPi).

40. Réseau selon l'une des revendications 35 à 39, **caractérisé en ce que** certains au moins desdits équipements de commutation sont des routeurs de coeur (RC).

41. Réseau de communications (N) selon l'une des revendications 37 à 40, **caractérisé en ce qu**'il est à protocole Internet.

## Claims

1. Traffic management method for a communication network (N) including switching equipments (RPi, RC), said method including the following steps:
i) effecting passive first measurements on at least one chosen traffic so as to deliver first values representative of at least one chosen traffic characteristic, and
ii) injecting into said network (N) an additional traffic corresponding to the first values of at least one of said chosen traffic characteristics, and then effecting active second measurements on said additional traffic to determine if it satisfies at least one chosen condition,

2. Method according to claim 1, **characterised in that** said condition is chosen in a group comprising at least one service level agreement, at least one characteristic defining a new service, and at least one quality degradation.

3. Method according to either of claims 1 or 2, **characterised in that** said first and second measurements are of local type and/or of so-called "end-to-end" type.

4. Method according to any one of claims 1 to 3, **characterised in that** a plurality of traffic characteristics are determined in order to deduce therefrom at least one traffic content.

5. Method according to claim 4, **characterised in that** said traffic content is chosen from the source of the traffic, the destination of the traffic, the class of service to which the traffic belongs, the (network layer) protocol used, and the mean size of the data transmitted.

6. Method according to either of claims 4 and 5, **characterised in that** at least one traffic profile is determined from said traffic content.

7. Method according to claim 6, **characterised in that** said traffic profile is chosen from the temporal distribution of the traffic and the load size distribution of the traffic.

8. Method according to any one of claims 4 to 7, **characterised in that** a quality of service is determined from said traffic content and/or from said traffic profile,

9. Method according to claim 8, **characterised in that** a local quality of service is determined.

10. Method according to claim 9, **characterised in that** said local quality of service is determined from measurements chosen in a group comprising at least the bandwidth used and the number of packets that have been observed, and/or statistical calculations on said measurements.

11. Method according to any one of claims 8 to 10, **characterised in that** an end-to-end quality of service is determined.

12. Method according to claim 11, **characterised in that** said end-to-end quality of service is determined from measurements chosen in a group comprising at least the transmission delay, the instability and the rate of loss of packets of data, and/or statistical calculations on said measurements.

13. Method according to any one of claims 8 to 12, **characterised in that** active second measurements are effected on said additional traffic to determine the associated quality of service, and then said quality of service of the additional traffic is compared to the quality of service of the chosen traffic, previously determined, so as to deduce any variation therefrom.

14. Method according to claim 13, **characterised in that** if said variation is above a chosen threshold said passive first measurements are repeated on said chosen traffic to determine new first values representative at least of said chosen traffic characteristic.

15. Method according to any one of claims 8 to 14, **characterised in that** there is injected into said network (N) an auxiliary traffic satisfying at least one auxiliary characteristic of value equal to the first value of said traffic characteristic previously determined apart from a chosen difference, after which active third measurements are effected on said auxiliary traffic, and the third values of those third measurements are compared to the second values previously obtained for said additional traffic, to determine an available quality of service margin given said quality of service determined for said chosen traffic.

16. Method according to any one of claims 8 to 15, **characterised in that** there is injected into said network (N) an auxiliary traffic satisfying an auxiliary quality of service equal to that determined for said chosen traffic apart from a chosen margin, then active third measurements are effected on said auxiliary traffic, and the third values of those third measurements are compared to the second values previously obtained for said additional traffic, to determine which traffic characteristic variation(s) is (are) associated with said auxiliary quality of service.

17. Switching equipment (RPi) for a communication network (N) including switching equipment (RPi, RC) coupled to each other to enable traffic to be set up between communication terminals (Tj), the equipment comprising:
i) application means (MA) adapted to inject into said network (N) an additional traffic corresponding to received first values representative of at least one chosen traffic characteristic, and
ii) measuring means (MM) adapted to effect passive first measurements on at least one chosen traffic, so as to deliver said first values representative of at least each chosen traffic characteristic, then active second measurements on said additional traffic, so as to deliver second values representative of each chosen traffic characteristic, and
the equipment being adapted to communicate with management means (MG) adapted to transmit to said application means (MA) said first values and to determine from said second values if said additional traffic satisfies at least one chosen condition.

18. Equipment according to claim 17, **characterised in that** said management means (MG) are adapted to choose said condition as a function of instructions in a group comprising at least one service level agreement, at least one characteristic defining a new service, and at least one quality degradation.

19. Equipment according to either of claims 17 and 18, **characterised in that** said application means (MA) are adapted to proceed to said injection on receipt or an instruction.

20. Equipment according to any one of claims 17 to 19, **characterised in that** said application means (MA) are adapted to proceed to said injection automatically and in accordance with a chosen period.

21. Equipment according to any one of claims 17 to 20, **characterised in that** said measuring means (MM) are adapted to effect passive first measurements and active second measurements of local type and/or of so-called "end-to-end" type.

22. Equipment according to any one of claims 17 to 21, **characterised in that** said measuring means (MM) are adapted to determine first values representative of a plurality of traffic characteristics and said management means (MG) are adapted to deduce from said first traffic characteristic values at least one traffic content, in order to store it in a memory (M).

23. Equipment according to claim 22, **characterised in that** said traffic content is chosen from the source of the traffic, the destination of the traffic, the class of service to which the traffic belongs, the (network layer) protocol used, and the mean size of the data transmitted.

24. Equipment according to either of claims 22 and 23, **characterised in that** said management means (MG) are adapted to determine at least one traffic profile from said traffic content, in order to store it in a memory (M).

25. Equipment according to claim 24, **characterised in that** said traffic profile is chosen from the temporal distribution of the traffic and the load size distribution of the traffic.

26. Equipment according to any one of claims 22 to 25, **characterised in that** said management means are adapted to determine a quality of service from said traffic content and/or said traffic profile, in order to store it in a memory (M).

27. Equipment according to claim 26, **characterised in that** said management means (MG) are adapted to determine a local quality of service.

28. Equipment according to claim 27, **characterised in that** said local quality of service is determined from measurements chosen in a group comprising at least the bandwidth used and the number of packets that have been observed, and/or statistical calculations on said measurements.

29. Equipment according to any one of claims 26 to 28, **characterised in that** said management means (MG) are adapted to determine an end-to-end quality of service.

30. Equipment according to claim 29, **characterised in that** said end-to-end quality of service is determined for measurements chosen in a group comprising at least the transmission delay, the instability and the rate of loss of packets of data, and/or statistical calculations on said measurements.

31. Equipment according to any one of claims 26 to 30, **characterised in that** said measuring means (MM) are adapted to effect active second measurements on said additional traffic and said management means (MG) are adapted to determine a quality of service associated with said second values of said active second measurements and then to compare said quality of service of the additional traffic to the quality of service of the chosen traffic, previously determined, so as to deduce any variation therefrom.

32. Equipment according to claim 31, **characterised in that** said management means (MG) are adapted, in case of detection of a variation above a chosen threshold, to instruct said measuring means (MM) to repeat said passive first measurements on said chosen traffic, so as to determine new first values of chosen traffic characteristic (s).

33. Equipment according to any one of claims 26 to 32, **characterised in that** said application means (MA) are adapted to inject into said network (N), on reception of an instruction, an auxiliary traffic satisfying at least one auxiliary characteristic of value equal to that of said traffic characteristic previously determined apart from a chosen difference, said measuring means (MM) are adapted to effect active third measurements on said auxiliary traffic, and said management means (MG) are adapted to compare the values of said active third measurements to the values of said active second measurement previously effected on said additional traffic, so as to determine an available quality of service margin given said quality of service determined for said chosen traffic.

34. Equipment according to any one of claims 26 to 33, **characterised in that** said application means (MA) are adapted to inject into said network (N), on receipt of an instruction, an auxiliary traffic satisfying an auxiliary quality of service equal to that determined for said chosen traffic apart from a chosen margin, said measuring means (MM) are adapted to effect active third measurements on said auxiliary traffic, and said management means (MG) are adapted to compare the values resulting from said active third measurements to the values of said active second measurements previously effected on said additional traffic, so as to determine which traffic characteristic variation(s) is (are) associated with said auxiliary quality of service.

35. Communication network (N), including switching equipments (RPi, RC) coupled to each other to enable the setting up of traffic between communication terminals (Tj), **characterised in that** at least one of said switching equipments (RPi) conforms to any one of claims 17 to 34.

36. Network according to the preceding claim, **characterised in that** it comprises at least one management terminal (S) equipped with said management means (MG) and said memory (M).

37. Network according to claim 35, **characterised in that** said management terminal (S) belongs to a network management system (NMS).

38. Network according to claim 35, **characterised in that** said management terminal (S) belongs to a network management subsystem coupled to a network management system (NMS).

39. Network according to any one of claims 35 to 38, **characterised in that** at least some of said switching equipments are edge routers (RPi).

40. Network according to any one of claims 35 to 39, **characterised in that** at least some of said switching equipments are core routers (RC).

41. Communication network (N) according to any one of claims 37 to 40, **characterised in that** it is an Internet Protocol network.

## Patentansprüche

1. Verfahren zur Verkehrsverwaltung für ein Kommunikationsnetz (N), das Vermittlungsvorrrichtungen (RPi, RC) enthält, wobei dieses Verfahren die folgenden Schritte einschließt:
i) Durchführung erster passiver Messungen an mindestens einem gewählten Verkehr, um erste Werte zu liefern, die für mindestens ein gewähltes Verkehrscharaktenstikum repräsentativ sind, und
ii) in dieses Netz (N) Einkopplung eines zusätzlichen Verkehrs, der den ersten Werten von mindestens einem dieser gewählten Verkehrscharakteristika entspricht,
und anschließend Durchführung zweiter aktiver Messungen an diesem zusätzlichen Verkehr, um zu ermitteln, ob er mindestens eine gewählte Bedingung bestätigt.

2. Verfahren gemäß Anspruch 1, **dadurch gekennzeichnet, dass** diese Bedingung gewählt wird aus einer Gruppe, die mindestens eine Vereinbarung über die Dienstgüte, mindestens ein Charakteristikum, das einen neuen Dienst definiert, und mindestens eine Qualitätsminderung enthält.

3. Verfahren gemäß Anspruch 1 oder Anspruch 2, **dadurch gekennzeichnet, dass** diese ersten und zweiten Messungen vom lokalen und/oder vom so genannten, durchgehenden" Typ sind.

4. Verfahren gemäß einem der Ansprüche 1 bis 3, **dadurch gekennzeichnet, dass** man mehrere Verkehrscharakteristika ermittelt, um daraus mindestens einen Verkehrsinhalt herzuleiten.

5. Verfahren gemäß Anspruch 4, **dadurch gekennzeichnet, dass** dieser Verkehrsinhalt gewählt wird aus der Quelle des Verkehrs, dem Ziel des Verkehrs, der Dienstklasse, zu der der Verkehr gehört, dem verwendeten (Netzschicht)-Protokoll und der durchschnittlichen Größe der übermittelten Daten.

6. Verfahren gemäß Anspruch 4 oder Anspruch 5, **dadurch gekennzeichnet, dass** man ausgehend von diesem Verkehrsinhalt mindestens ein Verkehrsprofil ermittelt.

7. Verfahren gemäß Anspruch 6, **dadurch gekennzeichnet, dass** dieses Verkehrsprofil gewählt wird aus der zeitlichen Verteilung des Verkehrs und der Größenverteilung der Verkehrslast.

8. Verfahren gemäß einem der Ansprüche 4 bis 7, **dadurch gekennzeichnet, dass** man ausgehend von diesem Verkehrsinhalt und/oder diesem Verkehrsprofil eine Diensiqualität ermittelt.

9. Verfahren gemäß Anspruch 8, **dadurch gekennzeichnet, dass** man eine lokale Dienstqualität ermittelt.

10. Verfahren gemäß Anspruch 9, **dadurch gekennzeichnet, dass** diese lokale Dienstqualität ermittelt wird ausgehend von Messungen, die gewählt werden aus einer Gruppe, welche mindestens den verwendeten Durchlassbereich und die Anzahl der beobachteten Pakete und/oder der statistischen Berechnungen bezüglich dieser Messungen enthält.

11. Verfahren gemäß einem der Ansprüche 8 bis 10, **dadurch gekennzeichnet, dass** man eine durchgehende Dienstqualität ermittelt.

12. Verfahren gemäß Anspruch 11, **dadurch gekennzeichnet, dass** diese durchgehende Dienstqualität ermittelt wird ausgehend von Messungen, die gewählt werden aus einer Gruppe, die mindestens die Übertragungsverzögerung, die Instabilität und die Datenpaketverlustrate und/oder statistische Berechnungen bezüglich dieser Messungen enthält.

13. Verfahren gemäß einem der Anspruche 8 bis 12, **dadurch gekennzeichnet, dass** man zweite aktive Messungen an diesem zusätzlichen Verkehr vormimmt, um die zugehörige Dienstqnalität zu ermitteln, dann diese Dienstqualität des zusätzlichen Verkehrs mit der zuvor ermiltenen Dienstqualität des gewählten Verkehrs vergleicht, um daraus eine etwaige Veränderung abzuleiten.

14. Verfahren gemäß Anspruch 13, **dadurch gekennzeichnet, dass** wenn diese Schwankung über einer gewählten Schwelle liegt, man diese ersten passiven Messungen an diesem gewählten Verkehr wiederholt, um neue erste Werte zu ermitteln, die zumindest repräsentativ sind für dieses gewählte Verkehrscharakteristikum.

15. Verfahren gemäß einem der Ansprüche 8 bis 14, **dadurch gekennzeichnet, dass** man in dieses Netz (N) einen Hilfsverkehr einkoppelt, der mindestens einem Hilfscharakteristikum entspricht mit einem Wert, der bis auf eine gewählte Abweichung gleich dem ersten zuvor ermittelten Wert dieses Verkehrscharakteristikums ist, dass man dann dritte aktive Messungen an diesem Hilfsverkehr durchführt und die dritten Werte dieser dritten Messungen mit den zweiten Werten vergleicht, die zuvor an diesem zusätzlichen Verkehr gewonnen wurden, um unter Berücksichtigung dieser für diesen gewählten Verkehr ermittelten Dienstqualität eine verfügbare Spanne für die Dienstqualität zu bestimmen.

16. Verfahren gemäß einem der Ansprüche 8 bis 15, **dadurch gekennzeichnet, dass** man in dieses Netz (N) einen Hilfsverkehr einkoppelt, der bis auf eine gewählte Spanne einer Hilfsdienstqualität gleich der für diesen gewählten Verkehr ermittelten entspricht, dass man dann dritte aktive Messungen an diesem Hilfsverkehr vornimmt, und man die dritten Werte dieser dritten Messungen mit den zweiten Werten vergleicht, die zuvor bezogen auf den zusätzlichen Verkehr erzielt wurden, um zu ermitteln welche Schwankung(en) betreffend das Verkehrscharakteristikum (die Verkehrscharakteristika) mit dieser Hilfsdienstqualität verbunden ist (sind).

17. Vermittlungsvorrichtung (RPi) für ein Kommunikationsnetz (N), das untereinander gekoppelte Vermittlungsvorrichtungen (RPi, RC) enthält, damit der Aufbau von Verkehr zwischen Kommunikationsendgeräten (Tj) wird, wobei die Vorrichtung folgendes einschließt :
i) Anwendungsmittel (MA), die so aufgebaut sind, dass in dieses Netz (N) ein zusätzlicher Verkehr eingekoppelt wird, der ersten empfangenen Werten entspricht, die für mindestens ein gewähltes Verkehrscharaktenstikum repräsentativ sind, und
ii) Messmittel (MM), die geeignet sind, erste passive Messungen an mindestens einem gewählten Verkehr durchzuführen, so dass diese ersten Werte geliefert werden die repräsentativ sind für mindestens jedes gewählte Verkehrscharakteristikum, dann zweite aktive Messungen an diesem zusätzlichen Verkehr, so dass zweite repräsentative Werte für jedes gewählte Verkehrscharakteristikum geliefert werden,
und die Ausrüstung ist geeignet für die Kommunikation mit Verwaltungsmitteln (MG), die so aufgebaut sind, dass sie diese ersten Werte an diese Anwendungsmittel (MA) übermitteln und ausgehend von diesen zweiten Werten ermitteln, ob dieser zusätzliche Verkehr mindestens eine gewählte Bedingung bestätigt.

18. Vorrichtung gemäß Anspruch 17, **dadurch gekennzeichnet, dass** diese Verwaltungsmittel (MG) so aufgebaut sind, dass sie diese Bedingungen in Abhängigkeit von Anweisungen aus einer Gruppe wählen, die mindestens eine Vereinbarung über die Dienstgüte, mindestens ein Charakteristikum, das einen neuen Dienst definiert, und mindestens eine Qualitätsminderung enthält.

19. Vorrichtung gemäß Anspruch 17 oder Anspruch 18, **dadurch gekennzeichnet, dass** diese Anwendungsmittel (MA) so aufgebaut sind, dass sie diese Einkopplung beim Empfangen von Anweisungen vornehmen.

20. Vorrichtung gemäß einem der Ansprüche 17 bis 19, **dadurch gekennzeichnet, dass** diese Anwendungsmittel (MA) so aufgebaut sind, dass sie diese Einkopplung automatisch und gemäß einer gewählten Periodizität vornehmen.

21. Vorrichtung gemäß einem der Anspruche. 17 bis 20, **dadurch gekennzeichnet, dass** diese Messmittel (MM) so aufgebaut sind, dass sie erste passive Messungen und zweite aktive Messungen des lokalen Typs und/oder des so genannten "durchgehenden" Typs durchführen.

22. Vorrichtung gemäß einem der Ansprüche 17 bis 21, **dadurch gekennzeichnet, dass** diese Messmittel (MM) so aufgebaut sind, dass sie erste Werte ermitteln, die für mehrere Verkehrscharakteristika repräsentativ sind, und **dadurch gekennzeichnet, dass** diese Verwaltungsmittel (MG) so aufgebaut sind, dass von diesen ersten Werten für Verkehrscharakteristika mindestens ein Verkehrsinhalt hergeleitet wird, um ihn in einem Speicher (M) abzuspeichern.

23. Vorrichtung gemäß Anspruch 22, **dadurch gekennzeichnet, dass** dieser Verkehrsinhalt gewählt wird aus der Quelle des Verkehrs, dem Ziel des Verkehrs, der Dienstklasse, zu welcher der Verkehr gehört, dem verwendeten (Netzschicht-) Protokoll und der durchschnittlichen Größe der übermittelten Daten.

24. Vorrichtung gemäß Anspruch 22 oder Anspruch 23, **dadurch gekennzeichnet, dass** diese Verwaltungsmittel (MG) so aufgebaut sind, dass sie ausgehend von diesem Verkehrsinhalt mindestens ein Verkehrsprofil ermitteln, um es in einem Speicher (M) abzuspeichern.

25. Vorrichtung gemäß Anspruch 24, **dadurch gekennzeichnet, dass** dieses Verkehrsprofil gewählt wird aus der zeitlichen Verteilung des Verkehrs und der Größenverteilung der Verkehrslast.

26. Vorrichtung gemäß einem der Ansprüche 22 bis 25, **dadurch gekennzeichnet, dass** diese Verwaltungsmittel so aufgebaut sind, dass sie ausgehend von diesem Verkehrsinhalt und/oder diesem Verkehrsprofil eine Dienstqualität ermitteln, um sie in einem Speicher (M) abzuspeichern.

27. Vorrichtung gemäß Anspruch 26, **dadurch gekennzeichnet, dass** diese Verwaltungsmittel (MG) so aufgebaut sind, dass sie eine lokale Dienstqualität ermitteln.

28. Vorrichtung gemäß Anspruch 27, **dadurch gekennzeichnet, dass** diese lokale Dienstqualität bestimmt wird auf der Grundlage von Messungen, die gewählt werden aus einer Gruppe, welche mindestens den verwendeten Durchlassbereich und die Anzahl der beobachteten Pakete und/oder der statistischen Berechnungen bezüglich dieser Messungen enthält.

29. Vorrichtung gemäß einem der Ansprüche 26 bis 28, **dadurch gekennzeichnet, dass** diese Verwaltungsmittel (MG) so aufgebaut sind, dass sie eine durchgehende Dienstqualität ermitteln.

30. Vorrichtung gemäß Anspruch 29, **dadurch gekennzeichnet, dass** diese durchgehende Dienstqualität ermittelt wird ausgehend von Messungen die gewählt werden aus einer Gruppe, die mindestens die Übertragungsverzögerung, die Instabilität und die Datenpaketverlustrate und/oder statistische Berechnungen bezüglich dieser Messungen enthält.

31. Vorrichtung gemäß einem der Ansprüche 26 bis 30, **dadurch gekennzeichnet, dass** diese Messmittel (MM) so ausgebaut sind, dass sie zweite aktive Messungen an diesem zusätzlichen Verkehr durchführen, und **dadurch gekennzeichnet, dass** diese Verwaltungsmittel (MG) so aufgebaut sind, dass sie eine zu den Ergebnissen der zweiten Werte dieser zweiten aktiven Messungen zugehörige Dienstqualität ermitteln, dann diese Dienstqualität des zusätzlichen Verkehrs mit der zuvor ermittelten Dienstqualität des gewählten Verkehrs vergleichen, um daraus eine etwaige Schwankung herzuleiten.

32. Vorrichtung gemäß Anspruch 31, **dadurch gekennzeichnet, dass** diese Verwaltungsmittel (MG) so aufgebaut sind, dass sie wenn sie eine Schwankung größer einer gewählten Schwelle erfassen, diesen Messmitteln (MM) gegenüber anordnen, diese ersten passiven Messungen an diesem gewählten Verkehr zu wiederholen, um neue erste Werte des (der) gewählten Verkehrscharakteristikums (Verkehrscharakteristika) zu ermitteln.

33. Vorrichtung gemäß einem der Ansprüche 26 bis 32, **dadurch gekennzeichnet, dass** diese Anwendungsmittel (MA) so aufgebaut sind, dass sie beim Empfangen einer Anweisung einen Hilfsverkehr, der mindestens einem Hilfscharakteristikum genügt, mit einem Wert, der bis auf eine gewählte Abweichung dem zuvor ermittelten Wert dieses Verkehrscharakteristikums entspricht, in das Netz einkoppeln, **dadurch gekennzeichnet, dass** diese Messmittel (MM) so aufgebaut sind, dass sie dritte aktive Messungen an diesem Hilfsverkehr durchführen, und **dadurch gekennzeichnet, dass** diese Verwaltungsmittel (MG) so aufgebaut sind, dass sie die Werte dieser dritten aktiven Messungen mit den Werten dieser zweiten zuvor am zusätzlichen Verkehr durchgeführten aktiven Messungen verglichen, um eine verfügbare Spanne Dienstqualität unter Berücksichtigung der für diesen gewählten Verkehr ermittelten Dienstqualität zu bestimmen.

34. Vorrichtung gemäß einem der Ansprüche 26 bis 33, **dadurch gekennzeichnet, dass** diese Anwendungsmittel (MA) so aufgebaut sind, dass sie beim Empfangen einer Anweisung einen Hilfsverkehr in dieses Netz (N) einkoppeln, der bis auf eine gewählte Spanne einer Hilfsdiensiqualität entspricht gleich derjenigen, die für diesen gewählten Verkehr ermittelt wurde, **dadurch gekennzeichnet, dass** diese Messmittel (MM) so aufgebaut sind, dass sie dritte aktive Messungen an diesem Hilfsverkehr durchführen, und **dadurch gekennzeichnet, dass** diese Verwaltungsmittel (MG) so aufgebaut sind, dass sie die Ergebnisse dieser dritten aktiven Messungen mit den Werten dieser zweiten aktiven Messungen vergleichen, die zuvor an diesem zusätzlichen Verkehr durchgeführt wurden, um zu bestimmen welche Charakteristikum(Charakteristika)schwankung(en) mit dieser Hilfsdienstqualität verbunden ist(sind).

35. Kommunikationsnetz (N), das Vermittlungsvorrichtungen (RPi, RC) einschließt, die untereinander gekoppelt sind, so dass der Aufbau von Verkehr zwischen Kommunikationsendgeräten (Tj) möglich ist, **dadurch gekennzeichnet, dass** zumindest eine dieser \/ermittlungsvorrichtungen (RPi) einem der Ansprüche 17 bis 34 entspricht.

36. Netz gemäß dem vorstehenden Anspruch, **dadurch gekennzeichnet, dass** es mindestens ein Verwaltungsendgerät (S) enthält, das mit diesen Verwaltungsmitteln (MG) und diesem Speicher (M) ausgestattet ist.

37. Netz gemäß Anspruch 35, **dadurch gekennzeichnet, dass** dieses Verwaltungsendgerät (S) zu einem System zur Netzverwaltung (NMS) gehört.

38. Netz gemäß Anspruch 35, **dadurch gekennzeichnet, dass** dieses Verwaltungsendgerät (S) zu einem Netzverwaltungs-Untersystem gehörte, an ein System zur Netzverwaltung (NMS) gekoppelt ist.

39. Netz gemäß einem der Ansprüche 35 bis 38, **dadurch gekennzeichnet, dass** zumindest einige dieser Vermittlungsvorrichtungen periphere Router (RPi) sind.

40. Netz gemäß einem der Ansprüche 35 bis 39, **dadurch gekennzeichnet, dass** zumindest einige dieser Vermittlungsvorrichtungen Kern-Router (RC) sind.

41. Kommunikationsnetz (N) gemäß einem der Ansprüche 37 bis 40, **dadurch gekennzeichnet, dass** es Internet-Protokoll hat.
